(19)

(11) **EP 3 009 470 B1**

(12) **EUROPÄISCHE PATENTSCHRIFT**

(45) Veröffentlichungstag und Bekanntmachung des Hinweises auf die Patenterteilung:
**21.10.2020 Patentblatt 2020/43**

(51) Int Cl.:
***C08J 7/04*** *(2020.01)* ***C08J 7/06*** *(2006.01)*
***B41M 5/00*** *(2006.01)*

(21) Anmeldenummer: **15182397.8**

(22) Anmeldetag: **25.08.2015**

(54) **MEHRSCHICHTKÖRPER UND VERFAHREN ZUM BESCHICHTEN EINES SUBSTRATS**

MULTILAYER BODY, AND METHOD FOR COATING A SUBSTRATE

CORPS MULTICOUCHES ET PROCEDE DE REVETEMENT D'UN SUBSTRAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2014 DE 102014114835**
**24.06.2015 DE 102015110125**

(43) Veröffentlichungstag der Anmeldung:
**20.04.2016 Patentblatt 2016/16**

(73) Patentinhaber: **Leonhard Kurz Stiftung & Co. KG**
**90763 Fürth (DE)**

(72) Erfinder:
- **OLSZOWKA, Violetta**
  **90513 Zirndorf (DE)**
- **SCHULLER, Kilian**
  **90766 Fürth (DE)**

(74) Vertreter: **Louis Pöhlau Lohrentz**
**Patentanwälte**
**Postfach 30 55**
**90014 Nürnberg (DE)**

(56) Entgegenhaltungen:
**WO-A1-2013/029845**
**DE-A1- 19 923 175**
**DE-A1- 19 936 504**
**DE-U1-202004 007 543**
**JP-A- H09 156 241**
**JP-A- H11 268 204**
**JP-A- 2007 145 025**
**US-A1- 2004 050 279**
**US-A1- 2010 151 207**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 009 470 B1

## Beschreibung

Die Erfindung betrifft einen Mehrschichtkörper sowie ein Verfahren zum Beschichten eines Substrats, sowie die Verwendung eines solchen Mehrschichtkörpers.

Prägefolien sind Mehrschichtkörper mit einer Trägerlage, auf der eine oder mehrere Schichten angeordnet sind. Dabei kann es sich um Funktionsschichten oder Lackschichten mit dekorativen oder informativen Funktionen handeln.

Um ein Substrat zu beschichten, wird die Prägefolie auf das Substrat aufgeprägt, wobei die der Trägerlage abgewandte Oberfläche auf dem Substrat zu liegen kommt. Beim Prägevorgang wird ferner die Trägerlage von den auf dem Substrat applizierten weiteren Schichten abgelöst. Um dies zu erleichtern, ist zwischen der Trägerlage und den weiteren Schichten der Prägefolie eine Ablöseschicht angeordnet, die die Haftung zwischen den weiteren Schichten und der Trägerlage minimiert. JPH11268204, JP2007145025 und US2010151207, zum Beispiel, offenbaren Mehrschichtkörper als Prägefolie ausgeformt mit einer Trägerfolie und einer auf der Trägerfolie unmittelbar und durchgängig angeordneten ersten Schicht, die eine fluorierte Verbindung umfasst, wobei die Schicht von der Trägerlage ablösbar ist.

Bei üblichen Prägefolien erfüllt die Ablöseschicht dabei keine weitere Funktion und wird oft zusammen mit der Trägerlage entfernt.

Aufgabe der vorliegenden Erfindung ist es, einen Mehrschichtkörper bereitzustellen, der eine besonders hohe Funktionsintegration aufweist. Es ist ferner Aufgabe der Erfindung, ein Verfahren zum Beschichten eines Substrats bereitzustellen, welches ein besonders gutes Beschichtungsergebnis gewährleistet.

Erfindungsgemäß wird diese Aufgabe mit dem Gegenstand der Ansprüche 1, 12 und 13 gelöst.

Ein solcher Mehrschichtkörper umfasst eine Trägerlage und eine auf der Trägerlage angeordnete erste Funktionsschicht, welche hydrophob, insbesondere superhydrophob ausgebildet ist.

Beim Übertragen des Mehrschichtkörpers auf eine Oberfläche eines Substrats, insbesondere durch Prägen, wird der Mehrschichtkörper mit seiner der Trägerlage abgewandten Seite auf das Substrat aufgebracht, insbesondere unter Einwirkung von Druck und/oder Wärme aufgeprägt, und anschließend die Trägerlage abgelöst. Aufgrund der hydrophoben Natur der ersten Funktionsschicht löst sich dabei die Trägerlage von der Funktionsschicht einfach ab und die Funktionsschicht verbleibt zusammen mit gegebenenfalls weiteren Schichten des Mehrschichtkörpers auf dem Substrat. Die Funktionsschicht bildet also die Oberfläche der derart beschichteten Region des Substrats und stellt in dieser Region eine hydrophobe, insbesondere superhydrophobe Oberfläche bereit.

Damit erfüllt die Funktionsschicht im Gegensatz zum aus dem Stand der Technik bekannten Ablöseschichten also eine doppelte Funktion. Sie dient nicht nur zur Ablösung der Trägerlage sondern kann aufgrund ihrer Hydrophobizität auch eine Schutzfunktion für die beschichtete Region des Substrats erfüllen und diese insbesondere vor Wasseranhaftung schützen.

Unter einer hydrophoben Schicht wird dabei eine Schicht verstanden, bei der ein aufgebrachter Wassertropfen einen Kontaktwinkel $\theta$ von mehr als 90° ausbildet. Bei superhydrophoben Schichten ist der Kontaktwinkel $\theta$ größer als 150°. Der Kontaktwinkel $\theta$ ist dabei durch die Youngsche Gleichung definiert:

$$\cos\theta = (\sigma_S - \sigma_{LS})\,\sigma_L^{-1}$$

$\sigma_S$ gibt dabei die Oberflächenspannung der Schicht an, $\sigma_L$ die Oberflächenspannung des Wassertropfens, bzw. einer benetzenden Flüssigkeit im Allgemeinen und $\sigma_{LS}$ die Grenzflächenenergie zwischen Wassertropfen und Schicht.

Ein solcher Mehrschichtkörper eignet sich beispielsweise zur Beschichtung von Verkleidungspaneelen, insbesondere für Wände, Decken und/oder Fußböden.

In einer bevorzugten Ausführungsform bildet die erste Funktionsschicht eine der Trägerlage abgewandte Oberfläche des Mehrschichtkörpers aus. Eine solche Funktionsschicht kann als Schutzschicht auf zu hydrophobisierende Substrate übertragen werden.

Bevorzugt beträgt eine Haftkraft zwischen der ersten Funktionsschicht und der Trägerlage von 4 cN (bzw. 3 N/m) bis 45 cN (bzw. 30 N/m), bevorzugt von 7 cN (bzw. 5 N/m) bis 23 cN (bzw. 15 N/m). Hierdurch wird ein leichtes Ablösen von der Trägerlage gewährleistet. Hierzu wird die mit Funktionsschicht beschichtete Folie mit einer von Breite 15 cm auf eine ABS-Platte bei 180 °C und der Geschwindigkeit 13 m/min abgeprägt. Die Ablösekraftmessung findet auf einer Zugprüfmaschine Zwick/Roell Z 1.0 bei Raumtemperatur statt. Hierzu wird die mit Funktionsschicht beschichtete Folie in einem Winkel von 90° und einem Messweg von 15 cm von der ABS-Platte abgezogen und so die Ablösekraft ermittelt.

Vorzugsweise ist dabei die erste Funktionsschicht als Lackschicht ausgebildet. Unter einem Lack wird hier dabei ein Beschichtungsmittel auf Basis eines wässrigen oder organischen Lösemittels verstanden, welches flüssig aufgetragen und ausgehärtet werden kann.

Die erste Funktionsschicht umfasst Mittel zum Erhöhen der Oberflächenrauigkeit. Durch derartige Mittel kann die Hydrophobizität der Funktionsschicht erhöht werden. Dies beruht auf der resultierenden Mikro- bzw. Nanostrukturierung der Oberfläche nach Art des Lotuseffekts.

Die Mittel zum Erhöhen der Oberflächenrauigkeit umfassen pyrogene und/oder gefällte und/oder vermahlene Kieselsäure oder Mischungen daraus, insbesondere mit Dimethydichlorsilan oder Hexamethyldisilazan hydrophobierte pyrogene und/oder gefällte und/oder vermahlene Kieselsäure oder Mischungen daraus. Bei einer solchen pyrogenen und/oder gefällten und/oder vermahlenen Kieselsäure oder Mischungen daraus handelt es sich um kolloides, amorphes Siliciumdioxid, welches eine besonders hohe Oberfläche aufweist und daher besonders geeignet zur Hydrophobisierung von Oberflächen ist. Dies wird durch die Silanisierung noch verstärkt.

Es ist dabei bevorzugt, wenn die pyrogene und/oder gefällte und/oder vermahlene Kieselsäure oder Mischungen daraus eine Partikelgröße D50 von 5 nm bis 60 μm, bevorzugt von 5 nm bis 35 μm, besonders bevorzugt von 5 nm bis 32 μm aufweist. Pyrogene Kieselsäure kann dabei eine insbesondere eine Partikelgröße D50 von 5 nm bis 50 nm aufweisen. Unter D50 wird dabei die mediane Partikelgröße, also die Partikelgröße bei 50% in der kumulativen Partikelgrößenverteilung, verstanden.

In einer weiteren bevorzugten Ausführungsform umfasst die erste Funktionsschicht eine fluorierte Verbindung, insbesondere aus der Gruppe Fluorethylen-Alkylvinylether, α-Perfluoropolyether, Fluorpolymerlatex, Poly(hexafluoropropylenoxid), Perfluorotripentylamin, Polytetrafluoroethylen, Perfluoralkoxid, Polychlortrifluorethylen, fluoriertes Ethylenpropylen, Ethylentetrafluorethylen, Ethylenchlortrifluorethylen, Polyvinylidenfluorid, insbesondere umfassend organische Substituenten.

Fluorierte Substanzen, insbesondere aus der genannten Substanzgruppe, zeichnen sich durch eine besonders hohe Hydrophobizität aus und sind daher besonders geeignet, dem Lack der ersten Funktionsschicht die gewünschten Eigenschaften zu verleihen.

Ferner ist es bevorzugt, wenn das Verhältnis der pyrogenen und/oder gefällten und/oder vermahlenen Kieselsäure oder Mischungen daraus im zur Herstellung der ersten Funktionsschicht verwendeten Lack zur fluorierten Verbindung von 1 bis 5 zu 0 bis 3, bevorzugt von 2 bis 4 zu 1 bis 2, besonders bevorzugt von 3 zu 1 beträgt.

Es ist weiter bevorzugt, wenn die erste Funktionsschicht durch einen Lack auf Lösemittelbasis gebildet ist. Abhängig vom Druckverfahren kann die Lösungsmittelzusammensetzung gewählt werden. Derartige Lacke sind insbesondere geeignet, um die oben genannten fluorierten Verbindungen und Mittel zur Erhöhung der Oberflächenrauigkeit aufzunehmen.

Bevorzugt weist die erste Funktionsschicht ein Flächengewicht von 0,1 $g/m^2$ oder mehr, bevorzugt von 0,5 $g/m^2$ oder mehr, besonders bevorzugt von 0,7 bis 2 $g/m^2$, und/oder eine Schichtdicke von 0,1 μm bis 3 μm, bevorzugt von 0,5 μm bis 2,5 μm, besonders bevorzugt von 0,7 μm bis 2 μm auf. In diesem Dickenbereich bzw. Flächengewichtsbereich kann sowohl die gewünschte Hydrophobizität als auch die gewünschte leichte Ablösbarkeit von der Trägerlage besonders gut gewährleistet werden.

Es ist weiter zweckmäßig, wenn der Mehrschichtkörper zumindest eine Lackschicht umfasst, welche auf der der Trägerlage abgewandten Seite der ersten Funktionsschicht angeordnet ist. Durch diese Lackschicht können beispielsweise dekorative Effekte realisiert werden. Beim Übertragen der Schichten des Mehrschichtkörpers auf ein Substrat ist diese Lackschicht dann substratseitig angeordnet und wird nach außen hin von der ersten Funktionsschicht geschützt.

Bevorzugt ist die zumindest eine Lackschicht aus einem Lack auf Wasserbasis gebildet. Überraschenderweise hat sich herausgestellt, dass trotz der hydrophoben Natur der ersten Funktionsschicht eine ausreichende Zwischenschichthaftung zwischen der Funktionsschicht und einer solchen Lackschicht erzielt werden kann, wobei die Lackschicht insbesondere direkt an die erste Funktionsschicht angrenzt.

Es ist besonders zweckmäßig, wenn die zumindest eine Lackschicht aus einem Lack auf Wasser-Isopropanol-Basis gebildet ist, dessen Wasser-zu-Isopropanol-Verhältnis 3,5:1 bis 1:1, bevorzugt 2,5:1 bis 2:1 beträgt. Die Beimengung von Isopropanol verbessert die Haftung der Lackschicht auf der ersten Funktionsschicht. Dies beruht darauf, dass das Isopropanol die Funktionsschicht partiell anlösen kann. Auf der der Lackschicht abgewandten Seite bleibt dagegen die hydrophobe Qualität der Oberfläche der Funktionsschicht vollständig erhalten.

Es ist weiter bevorzugt, wenn die zumindest eine Lackschicht zumindest einen Farbstoff und/oder zumindest ein Pigment umfasst. Hierdurch können dekorative oder informative Designs, Motive oder Strukturen in den Mehrschichtkörper eingebracht und auf ein Substrat übertragen werden.

Ferner ist es bevorzugt, wenn der Mehrschichtkörper eine Grundierungsschicht umfasst, welche eine der Trägerlage abgewandte Oberfläche des Mehrschichtkörpers ausbildet. Die Grundierungsschicht kommt also als Haftvermittlerschicht oder Kleberschicht beim Übertragen des Mehrschichtkörpers auf ein Substrat auf dem Substrat zu liegen. Je nach Material des Substrats kann die Grundierungsschicht so gestaltet werden, dass die Haftung auf dem Substrat optimiert wird.

Vorteilhafterweise ist die Trägerlage aus Polyethylen oder PET, insbesondere mit einer Schichtdicke von 5 μm bis 36 μm, bevorzugt von 12 μm bis 23 μm ausgebildet.

Beim Aufbringen des Mehrschichtkörpers auf ein Substrat ist es ferner zweckmäßig, wenn vor dem Aufbringen des Mehrschichtkörpers ein weiterer Mehrschichtkörper auf das Substrat aufgebracht, insbesondere aufgeprägt wird, wobei der Mehrschichtkörper anschließend auf den weiteren Mehrschichtkörper aufgebracht, insbesondere aufgeprägt wird.

In diesem Fall umfasst der Mehrschichtkörper bevorzugt lediglich die Trägerlage und die erste Funktionsschicht und ggf. eine Grundierungsschicht oder Haftvermittlerschicht. Alle weiteren dekorativen und/oder funktionalen Schichten werden also von dem weiteren Mehrschichtkörper bereitgestellt. Der abschließend aufgebrachte Mehrschichtkörper stellt lediglich die hydrophobe erste Funktionsschicht bereit und schützt somit die zuerst aufgebrachten Schichten. Damit können beispielsweise bereits verfügbare, nicht hydrophobisierte Prägefolien nach dem Prägen noch mit einer hydrophoben Schutzschicht versehen werden.

Die Erfindung wird nun anhand von Ausführungsbeispielen näher erläutert. Es zeigen

Fig. 1 Eine schematische Darstellung des Aufbaus und der Herstellung eines ersten Ausführungsbeispiels eines Mehrschichtkörpers;

Fig. 2 Eine schematische Darstellung des Aufbaus und der Herstellung eines zweiten Ausführungsbeispiels eines Mehrschichtkörpers;

Fig. 3 Eine schematische Darstellung des Aufbaus und der Herstellung eines dritten Ausführungsbeispiels eines Mehrschichtkörpers;

Fig. 4 Eine schematische Darstellung der Beschichtung eines Substrats mit einer konventionellen Prägefolie und einem Ausführungsbeispiel eines Mehrschichtkörpers;

Fig. 5 Eine schematische Darstellung des Kontaktwinkels zwischen einem Substrat und einer benetzenden Flüssigkeit.

Um einen als Prägefolie nutzbaren Mehrschichtkörper 1 zu fertigen, wird zunächst eine Trägerlage 11 aus Polyethylenterephthalat (PET) mit einer Schichtdicke von 6 μm bis 50 μm, bevorzugt von 12 μm bis 23 μm bereitgestellt. Beim Prägen wird diese Trägerlage 11 vom Mehrschichtkörper 1 abgelöst.

Zur Erleichterung dieses Ablösevorgangs wird im Folgenden eine Funktionsschicht 12 auf die Trägerlage 11 aufgebracht. Die Funktionsschicht 12 ist eine Lackschicht, die Mittel zum Erhöhen der Oberflächenrauigkeit umfasst. Dabei handelt es sich um pyrogene und/oder gefällte und/oder vermahlene Kieselsäure oder Mischungen daraus, insbesondere mit Dimethydichlorsilan Hexamethyldisilazan hydrophobierte pyrogene und/oder gefällte und/oder vermahlene Kieselsäure oder Mischungen daraus. Diese weist eine Partikelgröße D50 von 5 nm bis 60 μm, bevorzugt von 5 nm bis 35 μm, besonders bevorzugt von 5 nm bis 32 μm auf.

Ferner kann die Funktionsschicht 12 fluorierte Verbindungen umfassen, insbesondere aus der Gruppe Fluorethylen-Alkylvinylether, α-Perfluoropolyether, Fluorpolymerlatex, Poly(hexafluoropropylenoxid), Perfluorotripentylamin, Polytetrafluoroethylen, Perfluoralkoxid, Polychlortrifluorethylen, fluoriertes Ethylenpropylen, Ethylentetrafluorethylen, Ethylenchlortrifluorethylen, Polyvinylidenfluorid, insbesondere umfassend organische Substituenten.

Das Verhältnis der pyrogenen und/oder gefällten und/oder vermahlenen Kieselsäure oder Mischungen daraus im zur Herstellung der ersten Funktionsschicht verwendeten Lack zur fluorierten Verbindung beträgt dabei 1 bis 5 zu 0 bis 3, bevorzugt 2 bis 4 zu 1 bis 2, besonders bevorzugt 3 zu 1. Vorzugsweise wird die Funktionsschicht 12 durch einen Lack auf Lösemittelbasis aufgebaut und mit einem Flächengewicht im trockenen Zustand von 0,1 g/m$^2$ oder mehr, bevorzugt von 0,5 g/m$^2$ oder mehr, besonders bevorzugt von 0,7 g/m$^2$ bis 2 g/m$^2$, und/oder einer Schichtdicke von 0,1 μm bis 3 μm, bevorzugt von 0,5 μm bis 2,5 μm, besonders bevorzugt von 0,7 μm bis 2 μm auf die Trägerlage 11 aufgebracht.

Sowohl durch die Erhöhung der Oberflächenrauigkeit, als auch durch die Zugabe fluorierter Verbindungen wird die Hydrophobizität der Funktionsschicht 12 erhöht. Dies erleichtert das Ablösen von der Trägerlage 11.

Nach dem Prägen auf ein Substrat bildet die Funktionsschicht 12 die vom Substrat abgewandte Oberfläche aus. Durch die hydrophobe Natur der Funktionsschicht 12 wird die Oberfläche des Substrats somit vor Benetzung mit Wasser geschützt.

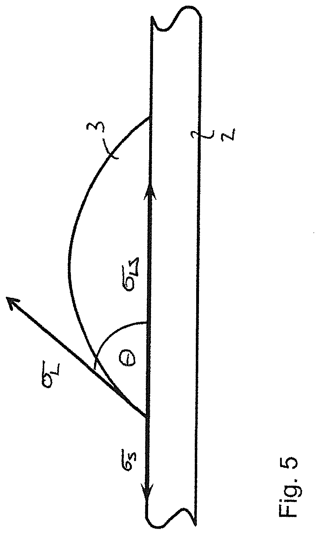

Das Funktionsprinzip dieses Feuchtigkeitsschutzes ist in Fig. 5 veranschaulicht. Ein auf ein Substrat 2 aufgebrachter Wassertropfen 3 nimmt in Abhängigkeit von seiner Oberflächenspannung, der Oberflächenenergie zwischen Substrat 2 und Wassertropfen 3, und der Oberflächenspannung des Substrats 2 unterschiedliche Formen an. Diese können durch den Kontaktwinkel θ beschrieben werden, der über die Young'sche Gleichung definiert wird:

$$\cos\theta = (\sigma_S - \sigma_{LS})\,\sigma_L^{-1}$$

$\sigma_S$ gibt dabei die Oberflächenspannung der Schicht an, $\sigma_L$ die Oberflächenspannung des Wassertropfens, bzw. einer benetzenden Flüssigkeit im Allgemeinen und $\sigma_{LS}$ die Grenzflächenenergie zwischen Wassertropfen und Schicht.

Je größer der Kontaktwinkel, desto mehr nähert sich der Wassertropfen 3 also der Kugelform an, wodurch gleichzeitig seine Kontaktfläche zur Oberfläche des Substrats 2 verringert wird. Damit nimmt auch die Haftung zwischen Wassertropfen 3 und Substrat 2 ab, so dass der Wassertropfen leicht abperlen kann und das Substrat 2 nicht benetzt.

Unter einer hydrophoben Schicht wird dabei eine Schicht verstanden, bei der ein aufgebrachter Wassertropfen einen Kontaktwinkel $\theta$ von mehr als 90° ausbildet. Bei superhydrophoben Schichten ist der Kontaktwinkel $\theta$ größer als 150°.

Um einen weiteren mechanischen Schutz zu gewährleisten, können dem Lack der Funktionsschicht 12 noch weitere Stoffe zugesetzt werden, wie beispielsweise Acrylate, Silikonmodifizierte Polyesterharze, Slip- und Kratzschutzadditive.

In Laborversuchen konnte gezeigt werden, dass die Funktionsschicht 12 gegenüber Umwelteinflüssen sehr beständig ist. So wurde beispielsweise im Temperatur- und Luftfeuchtetest (168 h bei 85°C und 85% rel. Feuchte nach IEC60068-2-67), im synthetischen Schweißtest nach DIN EN ISO 105-E04 und DIN 53160, im Salznebeltest nach DIN 50021, im Staubtest und im Test der Widerstandsfähigkeit gegen Säuren und Laugen keine nennenswerten Beeinträchtigungen festgestellt.

Die superhydrophobe Oberfläche hat weiterhin die Eigenschaft selbstreinigend zu sein, d. h. dass Staub auf der Oberfläche durch Abperlen der Wassertropfen entfernt wird und sich nicht festsetzt. Dies wurde in einer empirischen Laborbeobachtung nachgewiesen.

Zum Test der Widerstandsfähigkeit wurde jeweils ein Tropfen der folgenden Chemikalien auf die superhydrophobe Oberfläche aufgebracht: Natronlauge 10%ig, 1 h Einwirkzeit, Schwefelsäure 2%ig, 1 h Einwirkzeit, Essigsäure 10%ig, 1 h Einwirkzeit, Salzsäure, 1 h Einwirkzeit. In allen Tests konnte nach der Einwirkdauer keine Beeinträchtigung der superhydrophoben Oberfläche beobachtet werden.

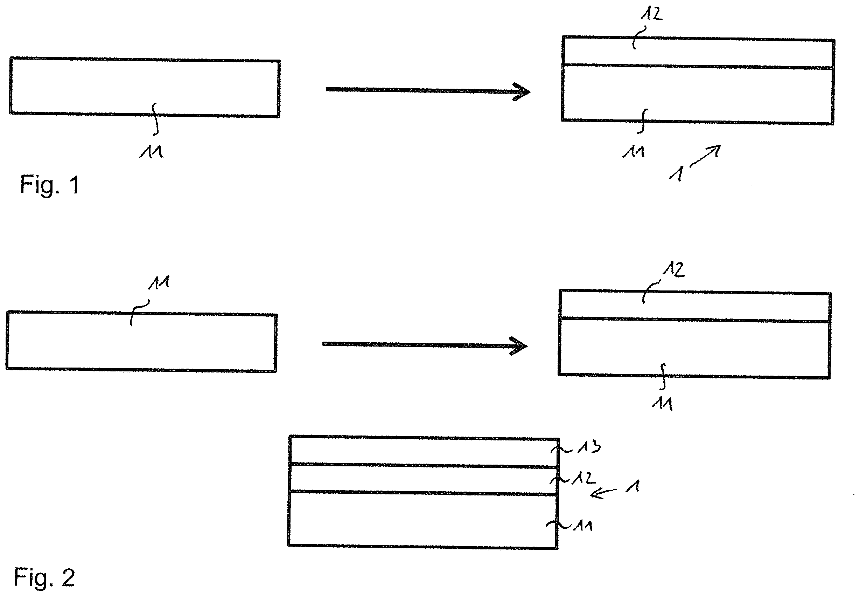

Wie Fig. 2 zeigt, kann auf die Funktionsschicht 12 noch eine weitere Lackschicht 13 aufgebracht werden. Diese kann insbesondere farbig sein und dekorative oder informative Funktionen erfüllen.

Es ist dabei bevorzugt, wenn die Haftkraft zwischen der ersten Funktionsschicht und der Lackschicht größer ist als die Haftkraft zwischen der ersten Funktionsschicht und der Trägerlage. Damit kann die Funktionsschicht von der Trägerlage abgelöst werden, ohne dass die Haftung der Lackschicht an der Funktionsschicht beeinträchtigt wird oder die Lackschicht beschädigt wird.

Die Lackschicht 13 kann dabei aus einem Lack auf Wasserbasis gebildet sein. Überraschenderweise hat sich herausgestellt, dass trotz der hydrophoben Natur der Funktionsschicht 12 eine ausreichende Zwischenschichthaftung zwischen der Funktionsschicht 12 und einer solchen Lackschicht 13 erzielt werden kann.

Dies ist insbesondere der Fall, wenn die zumindest eine Lackschicht aus einem Lack auf Wasser-Isopropanol-Basis gebildet ist, dessen Wasser-zu-Isopropanol-Verhältnis 3,5:1 bis 1:1, bevorzugt 2,5:1 bis 2:1 beträgt. Die Beimengung von Isopropanol verbessert die Haftung der Lackschicht 12 auf der Funktionsschicht 12. Dies beruht darauf, dass das Isopropanol die Funktionsschicht 12 partiell anlösen kann. Auf der der Lackschicht 13 abgewandten Seite bleibt dagegen die hydrophobe Qualität der Oberfläche der Funktionsschicht 12 vollständig erhalten.

Als weitere Beimengungen kann der für die Lackschicht 13 verwendete Lack Pigmente, Rußpigmente, ca. 35% bis 45% im Festkörper, Bindemittel wie z.B. Polyacrylate, Polyester-/Acetat-/Versatatcopolymere, ca. 20% bis 30% im Festkörper, Wachse wie z.B. Polyethylenwachse, Carnaubawachse, ca. 8% bis 20% im Festkörper, Füllstoffe wie Aluminiumsilikate und pyrogene und/oder gefällte und/oder vermahlene Kieselsäure oder Mischungen daraus, ca. 12% im Festkörper und Dispergieradditive, ca. 1% bis 7% im Festkörper, enthalten.

Eine beispielhafte Zusammensetzung für einen flüssigen Lack, also vor der Aushärtung zur Lackschicht 13 ist in der folgenden Tabelle angegeben:

| Bestandteil | Anteil im flüssigen Lack (%) |
|---|---|
| Deionisiertes Wasser | 33 |
| Isopropanol | 16 |
| Ammoniaklösung 25% | 1 |
| Dispergieradditiv | 3 |
| Rußpigment | 13 |
| Pyrogene und/oder gefällte und/oder vermahlene Kieselsäure oder Mischungen daraus | 1 |
| Aluminiumsilikat | 3 |
| Polyethylenwachs | 7 |
| Carnaubawachs | 7 |

(fortgesetzt)

| Bestandteil | Anteil im flüssigen Lack (%) |
|---|---|
| Polyacrylat | 3 |
| Polyester-/Acetat-/Versatat Copolymer | 13 |

Bei der in Fig. 2 gezeigten Ausführungsform kommt beim Prägen die Lackschicht 13 in direkten Kontakt mit dem Substrat und dient somit gleichzeitig als Haftvermittler.

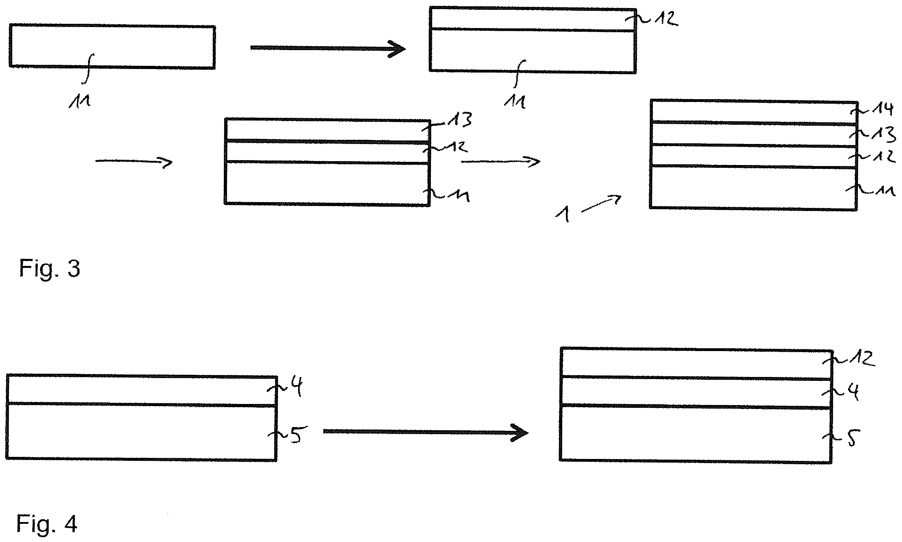

Alternativ dazu kann, wie in Fig. 3 gezeigt, auf die Lackschicht 13 noch eine Grundierung 14 aufgebracht werden, die speziell der Haftvermittlung zwischen Substrat und aufgeprägtem Mehrschichtkörper 1 dient. Die Zusammensetzung der Grundierung 14 kann dabei jeweils nach zu beprägendem Substrat angepasst werden.

Wie Fig. 4 zeigt, ist es ferner möglich, zunächst eine weitere Prägefolie 4 auf ein Substrat 5 aufzuprägen. In einem zweiten Prägeschritt wird dann ein Mehrschichtkörper 1 auf die weitere Prägefolie 4 aufgebracht. Der Mehrschichtkörper 1 umfasst hier bevorzugt nur eine Trägerlage 11 und eine Funktionsschicht 12, so dass er einen hydrophoben Abschluss für die weitere Prägefolie 4 bildet. Es ist jedoch auch möglich, weitere Lackschichten und Dekorelemente in den Mehrschichtkörper 1 zu integrieren.

Auf diese Weise können ansprechende und gleichzeitig schützende Oberflächenbeschichtungen für verschiedenste Objekte bereitgestellt werden. Möglich ist z.B. die Beschichtung von Haushaltsgeräten, insbesondere in Bereichen wo Kondenswasser auftritt und abperlen soll, elektronischen Geräten, wie beispielsweise Smartphones, Tablets, Laptops oder dgl., Innenverkleidungsteilen für Kraftfahrzeuge, Textilfolien und vielem mehr.

Eine weitere Einsatzmöglichkeit der Erfindung ist die Beschichtung von Verkleidungspaneelen für Wände, Decken oder Fußböden, insbesondere aus Kunststoff und/oder Holz, insbesondere aus MDF (MDF = mitteldichte Faserplatte) oder HDF (HDF = hochdichte Faserplatte). Bei derartigen Paneelen ist der innere faserige Kernwerkstoff üblicherweise an der Ober- und/oder Unterseite des Paneels großflächig mit mehreren Lagen aus Papier und/oder Kunststoff mittels Laminations- bzw. Pressverfahren laminiert und somit an diesen großen Flächen gegen das Eindringen von Feuchtigkeit geschützt. Dabei bleiben aber die seitlichen Kanten meist offen und sind gegen das Eindringen von Feuchtigkeit nur wenig oder gar nicht geschützt. Die Kanten werden daher manchmal mittels Nasslackierung aufwendig imprägniert. Nachteil dabei ist, dass ein nasser Lack in großen Mengen in den Kernwerkstoff eindringt und die Oberfläche nur unzureichend versiegelt. Es ist also eine unerwünscht große Menge Nasslack nötig, wobei das Verfahren auch ansonsten sehr aufwendig, umweltschädlich und teuer ist.

Die Kanten der Paneele können dabei im rechten Winkel (ca. 90°) zur Ober- und/oder Unterseite angeordnet sein oder mit der Ober- und/oder Unterseite einen kleineren Winkel einschließen und dadurch eine Abschrägung zu der Ober- und/oder Unterseite des Paneels bilden. Diese Abschrägung lässt im verbauten Zustand mit dem jeweils benachbarten Paneel eine gegenüber dem übrigen Paneel vertiefte Fuge, insbesondere eine V-Fuge entstehen. Bei einer rechtwinklig angeordneten Kante weisen im verbauten Zustand jeweils zwei rechtwinklig angeordneten Kanten zueinander und lassen dadurch eine insbesondere sehr schmale, rechtwinklig zur Oberfläche der Paneele angeordnete Fuge entstehen. Die Kanten der Paneele können aber auch ein komplexes Querschnittsprofil aufweisen, insbesondere zur Bildung eines mechanischen Befestigungs- Zusammenbausystems (Click-System), wobei die Kantenprofile zweier im verbauten Zustand benachbarter Paneele ineinander greifen und sich dadurch gegenseitig stabilisieren und halten. Innerhalb dieses Querschnittsprofils kann der Winkel der Kante zur Oberfläche der Paneele in vielfältiger Art und Weise mehrfach variieren.

In dieser Vertiefung der V-Fuge oder der senkrechten schmalen Fuge oder auch in dem komplexen Querschnittsprofil, welches insbesondere auch Hinterschneidungen aufweisen kann, kann sich bevorzugt Feuchtigkeit und/oder Schmutz ansammeln oder auch beim Reinigen der Paneele dort unbeabsichtigt eingebracht werden. Insbesondere bei MDF oder HDF ist dies nachteilig, da diese Werkstoffe an ihren Kanten, wie erläutert, besonders feuchtigkeitsempfindlich sind.

Der Mehrschichtkörper kann bewirken, dass diese Feuchtigkeit und/oder Schmutz entweder nicht oder weniger, insbesondere weniger tief in die Fuge eindringen kann und/oder dass diese Feuchtigkeit und/oder Schmutz leichter wieder aus der Fuge, beispielsweise durch Absaugen oder Auskehren, entfernt werden kann. Dadurch kann die Lebensdauer einer solchen Verkleidung mit Paneelen erhöht werden. Dadurch, dass der Mehrschichtkörper in der Vertiefung der Fuge angeordnet ist, kann die Funktionsschicht des Mehrschichtkörpers gegen mechanische Belastung, insbesondere Abrieb geschützt und so langzeitiger haltbar sein. Insbesondere in der oben beschriebenen schmalen, rechtwinklig zur Oberfläche der Paneele angeordneten Fuge ist der Mehrschichtkörper praktisch von außen nicht mehr zugänglich und somit ist die Funktionsschicht des Mehrschichtkörpers besonders gut geschützt. Eine Benetzung der mit dem Mehrschichtkörper bedeckten Bereiche der Fuge mit Wasser oder Feuchtigkeit kann damit langzeitig verringert oder ganz vermieden werden.

Dazu wird der Mehrschichtkörper auf die Kante, insbesondere die Fuge, die V-Fuge oder zumindest auf Teilbereiche eines komplexen Querschnittsprofils mittels Heißprägen appliziert. Im Falle des komplexen Querschnittsprofils ist es auch möglich, den Mehrschichtkörper auf verschiedene, insbesondere unterschiedlich abgewinkelte Teilbereiche des komplexen Querschnittsprofils in mehrmaligen Heißprägungen zu applizieren. Die mit dem Mehrschichtkörper beschichteten Teilbereiche können dann gemeinsam eine Benetzung mit Wasser oder Feuchtigkeit verringern oder ganz vermeiden. Auf der Kante kann zuvor eine Beschichtung, insbesondere als Haftvermittlerschicht und/oder als Dekorationsschicht aufgebracht worden sein, beispielsweise mittels Nassbeschichtung. Die zuvor aufgebrachte Beschichtung kann dabei ein- oder mehrfarbig sein und auch durch den Mehrschichtkörper hindurch zumindest teilweise sichtbar sein.

Für die zuvor genannte Ausführung zur Verwendung bei Paneelen weist der Mehrschichtkörper eine Trägerlage 11 auf, auf die die Funktionsschicht 12 insbesondere ablösbar, aufgebracht ist. Auf der Funktionsschicht 12 ist eine Haftvermittlerschicht vorgesehen, die die Haftung zwischen der Funktionsschicht 12 und den nachfolgenden Schichten verbessert. Dies kann besonders vorteilhaft sein, wenn die Funktionsschicht aus einem wasserbasierenden Lack gebildet ist und die nachfolgenden Schichten beispielsweise lösemittelbasiert sind. Diese nachfolgenden Schichten sind zumindest eine insbesondere lösemittelbasierte Dekorschicht und/oder zumindest eine insbesondere lösemittelbasierte Farbschicht, wobei die Dekorschicht und die Farbschicht gemeinsam eine Dekorationsschicht bilden können. Beispielsweise bildet dabei die Dekorschicht eine partielle motivbildende Schicht auf der den Hintergrund für das Motiv bildenden Dekorschicht. Auf der Farbschicht kann zumindest eine insbesondere lösemittelbasierende Kleberschicht angeordnet sein, die die Haftung zum Untergrund, also in diesem Falle zur abgeschrägten Kante des Paneels erzeugt.
Die Haftvermittlerschicht kann dabei ähnlich zusammengesetzt sein wie die oben beschriebene Lackschicht 13, jedoch ohne das dort verwendete Rußpigment.

Die Dekorschicht und die Farbschicht können jeweils aus einem thermoplastischen Lack mit Farbpigmenten und/oder Farbstoffen gebildet sein, insbesondere aus einem Lack auf Basis von PVC (Polyvinylchlorid), Acrylat, EVA (Ethylenvinylacetat), Polyvinylester, PVB (Polyvinylbutyral), Polyesterharz, Ketonharz, Formaldehydharz, Kolophoniumharz, Polyurethanharz oder dergleichen.

Die Kleberschicht kann aus einem thermoplastischen Schmelzkleber gebildet sein, insbesondere aus einem Lack auf Basis von PVC (Polyvinylchlorid), Acrylat, EVA (Ethylenvinylacetat), Polyvinylester, PVB (Polyvinylbutyral), Polyesterharz, Ketonharz, Formaldehydharz, Kolophoniumharz, Polyurethanharz oder dergleichen. Die Kleberschicht kann dabei transparent oder transluzent farblos oder alternativ transparent, transluzent oder opak eingefärbt sein mit Hilfe von Farbpigmenten und/oder Farbstoffen.

Bezugszeichenliste

| | |
|---|---|
| 1 | Mehrschichtkörper |
| 11 | Trägerlage |
| 12 | Funktionsschicht |
| 13 | Lackschicht |
| 14 | Grundierung |
| 2 | Substrat |
| 3 | Wassertropfen |
| 4 | Prägefolie |
| 5 | Substrat |

## Patentansprüche

**1.** Mehrschichtkörper (1) als Prägefolie (4) ausgeformt mit einer Trägerlage (11) und einer auf der Trägerlage (11) unmittelbar und durchgängig angeordneten ersten Funktionsschicht (12), welche hydrophob ausgebildet ist, wobei die Funktionsschicht (12) von der Trägerlage (11) ablösbar ist, wobei unter einer hydrophoben Schicht eine Schicht verstanden wird, bei der ein aufgebrachter Wassertropfen einen Kontaktwinkel $\theta$ von mehr als 90° ausbildet, wobei der Kontaktwinkel $\theta$ durch die Youngsche Gleichung

$$\cos\theta = (\sigma_S - \sigma_{LS})\,\sigma_L^{-1}$$

definiert ist, wobei $\sigma_S$ die Oberflächenspannung der Schicht angibt, $\sigma_L$ die Oberflächenspannung des Wassertropfens

und $\sigma_{LS}$ die Grenzflächenenergie zwischen Wassertropfen und Schicht angibt, wobei die erste Funktionsschicht (12) Mittel zum Erhöhen der Oberflächenrauigkeit umfasst und wobei die Mittel zum Erhöhen der Oberflächenrauigkeit pyrogene und/oder gefällte und/oder vermahlene Kieselsäure oder Mischungen daraus umfassen.

**2.** Mehrschichtkörper (1) nach Anspruch 1,
**dadurch gekennzeichnet,**
**dass** gemessen nach der Methode in der Beschreibung eine Haftkraft zwischen der ersten Funktionsschicht (12) und der Trägerlage (11) von 4 cN (bzw. 3 N/m) bis 45 cN (bzw. 30 N/m), bevorzugt von 7 cN (bzw. 5 N/m) bis 23 cN (bzw. 15 N/m) beträgt.

**3.** Mehrschichtkörper (1) nach einem der Ansprüche 1 oder 2,
**dadurch gekennzeichnet,**
**dass** die erste Funktionsschicht (12) als Lackschicht ausgebildet ist.

**4.** Mehrschichtkörper (1) nach einem der Ansprüche 1 bis 3,
**dadurch gekennzeichnet,**
**dass** die Mittel zum Erhöhen der Oberflächenrauigkeit mit Dimethydichlorsilan hydrophobierte pyrogene und/oder gefällte und/oder vermahlene Kieselsäure oder Mischungen daraus umfassen.

**5.** Mehrschichtkörper (1) nach einem der Ansprüche 1 bis 4,
**dadurch gekennzeichnet,**
**dass** die erste Funktionsschicht (12) eine fluorierte Verbindung umfasst, insbesondere aus der Gruppe Fluorethylen-Alkylvinylether, $\alpha$-Perfluoropolyether, Fluorpolymerlatex, Poly(hexafluoroproylenoxid), Perfluorotripentylamin, Polytetrafluoroethylen, Perfluoralkoxid, Polychlortrifluorethylen, fluoriertes Ethylenpropylen, Ethylentetrafluorethylen, Ethylenchlortrifluorethylen, Polyvinylidenfluorid, insbesondere umfassend organische Substituenten.

**6.** Mehrschichtkörper (1) nach Anspruch 1 oder 4 in Kombination mit Anspruch 5,
**dadurch gekennzeichnet,**
**dass** das Verhältnis der pyrogenen und/oder gefällte und/oder vermahlene Kieselsäure oder Mischungen daraus im zur Herstellung der ersten Funktionsschicht (12) verwendeten Lack zur fluorierten Verbindung von 1 bis 5 zu 0 bis 3, bevorzugt von 2 bis 4 zu 1 bis 2, besonders bevorzugt von 3 zu 1 beträgt.

**7.** Mehrschichtkörper (1) nach einem der Ansprüche 3 bis 6,
**dadurch gekennzeichnet,**
**dass** die erste Funktionsschicht (12) durch einen Lack auf Lösemittelbasis gebildet ist.

**8.** Mehrschichtkörper (1) nach einem der Ansprüche 1 bis 7,
**dadurch gekennzeichnet,**
**dass** die erste Funktionsschicht (12) ein Flächengewicht von 0,1 g/m$^2$ oder mehr, bevorzugt von 0,5 g/m$^2$ oder mehr, besonders bevorzugt von 0,7 g/m$^2$ bis 2 g/m$^2$, und/oder eine Schichtdicke von 0,1 $\mu$m bis 3 $\mu$m, bevorzugt von 0,5 $\mu$m bis 2,5 $\mu$m, besonders bevorzugt von 0,7 $\mu$m bis 2 $\mu$m aufweist.

**9.** Mehrschichtkörper (1) nach einem der Ansprüche 3 bis 8,
**dadurch gekennzeichnet,**
**dass** der Mehrschichtkörper (1) zumindest eine Lackschicht (13) umfasst, welche auf der der Trägerlage (11) abgewandten Seite der ersten Funktionsschicht (12) angeordnet ist, und die insbesondere zumindest einen Farbstoff und/oder zumindest ein Pigment umfasst.

**10.** Mehrschichtkörper (1) nach Anspruch 9,
**dadurch gekennzeichnet,**
**dass** die Haftkraft zwischen der ersten Funktionsschicht (12) und der Lackschicht (13) größer ist als die Haftkraft zwischen der ersten Funktionsschicht (12) und der Trägerlage (11).

**11.** Mehrschichtkörper (1) nach Anspruch 9 oder 10,
**dadurch gekennzeichnet,**
**dass** die zumindest eine Lackschicht (13) aus einem Lack auf Wasserbasis gebildet ist, insbesondere aus einem Lack auf Wasser-Isopropanol-Basis, dessen Wasser-zu-Isopropanol-Verhältnis 3,5:1 bis 1:1, bevorzugt 2,5:1 bis 2:1 beträgt.

**12.** Verfahren zum Beschichten eines Substrats (5), bei welchem ein Mehrschichtkörper (1) nach einem der Ansprüche 1 bis 11 mit seiner der Trägerlage (11) abgewandten Oberfläche auf das Substrat (5) aufgebracht, insbesondere aufgeprägt, wird, wobei die Trägerlage (11) des Mehrschichtkörpers (1) abgelöst wird, wobei insbesondere vor dem Aufbringen des Mehrschichtkörpers (1) ein weiterer Mehrschichtkörper auf das Substrat (5) aufgebracht, insbesondere aufgeprägt wird, und der Mehrschichtkörper (1) anschließend auf den weiteren Mehrschichtkörper aufgebracht, insbesondere aufgeprägt wird.

**13.** Verwendung eines Mehrschichtkörpers (1) nach einem der Ansprüche 1 bis 11 zur Beschichtung von Verkleidungspaneelen, insbesondere für Wände, Decken und/oder Fußböden.

**Claims**

**1.** Multilayer body (1) as a stamping film (4) formed having a carrier ply (11) and a first functional layer (12) arranged directly and consistently on the carrier ply (11), said functional layer being formed hydrophobically, wherein the functional layer (12) can be detached from the carrier ply (11), wherein a hydrophobic layer is understood as a layer in which an applied water drop forms a contact angle $\theta$ of more than 90°, wherein the contact angle $\theta$ is defined by the Young's equation

$$\cos\theta = (\sigma_S - \sigma_{LS})\,\sigma_L^{-1},$$

wherein $\alpha_S$ represents the surface tension of the layer, $\sigma_L$ represents the surface tension of the water drop, and $\sigma_{LS}$ represents the interfacial energy between water drop and layer, wherein the first functional layer (12) comprises means for increasing the surface roughness, and wherein the means for increasing the surface roughness comprise pyrogenic and/or precipitated and/or ground silicic acid or mixtures thereof.

**2.** Multilayer body (1) according to claim 1,
**characterised in that**,
measured according to the method in the description, an adhesive force between the first functional layer (12) and the carrier ply (11) is from 4 cN (or 3 N/m) to 45 cN (or 30 N/m), preferably from 7 cN (or 5 N/m) to 23 cN (or 15 N/m).

**3.** Multilayer body (1) according to one of claims 1 or 2,
**characterised in that**
the first functional layer (12) is formed as a lacquer layer.

**4.** Multilayer body (1) according to one of claims 1 to 3,
**characterised in that**
the means for increasing the surface roughness comprise pyrogenic and/or precipitated and/or ground silicic acid or mixtures thereof hydrophobised with dimethyldichlorosilane.

**5.** Multilayer body (1) according to one of claims 1 to 4,
**characterised in that**
the first functional layer (12) comprises a fluorinated compound, in particular from the group of fluoroethylene-alkyl vinyl ether, $\alpha$-perfluoropolyether, fluoropolymer latex, poly(hexafluoropropylene oxide), perfluorotripentylamine, polytetrafluoroethylene, perfluoroalkoxide, polychlorotrifluoroethylene, fluorinated ethylene-propylene, ethylene tetrafluoroethylene, ethylene chlorotrifluoroethylene, polyvinylidene fluoride, in particular comprising organic substituents.

**6.** Multilayer body (1) according to claim 1 or 4 in combination with claim 5,
**characterised in that**
the ratio of the pyrogenic and/or precipitated and/or ground silicic acid or mixtures thereof in the lacquer used for producing the first functional layer (12) to form the fluorinated compound is from 1 to 5 to 0 to 3, preferably from 2 to 4 to 1 to 2, particularly preferably from 3 to 1.

**7.** Multilayer body (1) according to one of claims 3 to 6,
**characterised in that**

the first functional layer (12) is formed by a solvent-based lacquer.

**8.** Multilayer body (1) according to one of claims 1 to 7,
**characterised in that**
the first functional layer (12) has a surface weight of 0.1g/$m^2$ or more, preferably of 0.5g/$m^2$ or more, particularly preferably of from 0.7g/$m^2$ to 2g/$m^2$, and/or a layer thickness of from 0.1$\mu$m to 3$\mu$m, preferably from 0.5$\mu$m to 2.5$\mu$m, particularly preferably from 0.7$\mu$m to 2$\mu$m.

**9.** Multilayer body (1) according to one of claims 3 to 8,
**characterised in that**
the multilayer body (1) comprises at least one lacquer layer (13) which is arranged on the side of the first functional layer (12) facing away from the carrier ply (11), and which comprises, in particular, at least one dye and/or at least one pigment.

**10.** Multilayer body (1) according to claim 9,
**characterised in that**
the adhesive force between the first functional layer (12) and the lacquer layer (13) is greater than the adhesive force between the first functional layer (12) and the carrier ply (11).

**11.** Multilayer body (1) according to claim 9 or 10,
**characterised in that**
the at least one lacquer layer (13) is formed from a water-based lacquer, in particular from a water-isopropanol-based lacquer, the water-to-isopropanol ratio of which is 3.5:1 to 1:1, preferably 2.5:1 to 2:1.

**12.** Method for coating a substrate (5), in which a multilayer body (1) according to one of claims 1 to 11 having its surface facing away from the carrier ply (11) is applied, in particular embossed, onto the substrate (5), wherein the carrier ply (11) of the multilayer body (1) is detached, wherein, in particular before the application of the multilayer body (1), a further multilayer body is applied, in particular embossed, onto the substrate (5), and the multilayer body (1) is subsequently applied, in particular embossed, onto the further multilayer body.

**13.** Use of a multilayer body (1) according to one of claims 1 to 11 for coating cladding panels, in particular for walls, ceilings and/or floors.

## Revendications

**1.** Corps multicouche (1) formé en tant que film d'estampage (4) avec une strate de support (11) et une première couche fonctionnelle (12) disposée sur la strate de support (11) directement et en continu, laquelle est réalisée de manière hydrophobe, dans lequel la couche fonctionnelle (12) peut être détachée de la strate de support (11), dans lequel on entend par une couche hydrophobe une couche, pour laquelle une goutte d'eau appliquée réalise un angle de contact $\theta$ supérieur à 90°, dans lequel l'angle de contact $\theta$ est défini par l'équation de Young

$$\cos \theta = (\sigma_S - \sigma_{LS})\, \sigma_L^{-1}$$

,

dans lequel $\sigma_S$ indique la tension de surface de la couche, $\sigma_L$ indique la tension de surface de la goutte d'eau et $\sigma_{LS}$ indique l'énergie de surface limite entre la goutte d'eau et la couche,
dans lequel la première couche fonctionnelle (12) comprend des moyens pour élever la rugosité de surface et dans lequel les moyens pour élever la rugosité de surface comprennent de l'acide silicique pyrogène et/ou précipité et/ou broyé ou des mélanges de ceux-ci.

**2.** Corps multicouche (1) selon la revendication 1,
**caractérisé en ce**
**qu'**une force d'adhérence entre la première couche fonctionnelle (12) et la strate de support (11), mesurée selon la méthode dans la description va de 4 cN (ou 3 N/m) à 45 cN (ou 30 N/m), de manière préférée va de 7 cN (ou 5 N/m) à 23 cN (ou 15 N/m).

3. Corps multicouche (1) selon l'une quelconque des revendications 1 ou 2,
**caractérisé en ce**
**que** la première couche fonctionnelle (12) est réalisée en tant que couche de vernis.

4. Corps multicouche (1) selon l'une quelconque des revendications 1 à 3,
**caractérisé en ce**
**que** les moyens pour élever la rugosité de surface comprennent de l'acide silicique pyrogène et/ou précipité et/ou broyé rendu hydrophobe avec du diméthylchlorosilane ou des mélanges de ceux-ci.

5. Corps multicouche (1) selon l'une quelconque des revendications 1 à 4,
**caractérisé en ce**
**que** la première couche fonctionnelle (12) comprend un composé fluoré, en particulier issu du groupe fluoroéthylène-alkylvinyléther, α-perfluoropolyéther, latex de polymère fluoré, poly(hexafluoroproylénoxyde), perfluorotripentylamine, polytétrafluoroéthylène, perfluoroalkoxy, polychlorotrifluoroéthylène, éthylène propylène fluoré, éthylène tétrafluoroéthylène, éthylènechloro-trifluoroéthylène, polyfluorure de vinylidène, en particulier comprenant des substituants organiques.

6. Corps multicouche (1) selon la revendication 1 ou 4 en combinaison avec la revendication 5,
**caractérisé en ce**
**que** le rapport entre l'acide silicique pyrogène et/ou précipité et/ou broyé ou des mélanges de ceux-ci dans le vernis utilisé pour la fabrication de la première couche fonctionnelle (12) et le composé fluoré va de 1 à 5 pour 0 à 3, de manière préférée de 2 à 4 pour 1 à 2, de manière particulièrement préférée est de 3 pour 1.

7. Corps multicouche (1) selon l'une quelconque des revendications 3 à 6,
**caractérisé en ce**
**que** la première couche fonctionnelle (12) est formée par un vernis à base de solvant.

8. Corps multicouche (1) selon l'une quelconque des revendications 1 à 7,
**caractérisé en ce**
**que** la première couche fonctionnelle (12) présente un poids surfacique de 0,1 g/m$^2$ ou plus, de manière préférée de 0,5 g/m$^2$ ou plus, de manière particulièrement préférée de 0,7 g/m$^2$ à 2 g/m$^2$, et/ou une épaisseur de couche de 0,1 μm à 3 μm, de manière préférée de 0,5 μm à 2,5 μm, de manière particulièrement préférée de 0,7 μm à 2 μm.

9. Corps multicouche (1) selon l'une quelconque des revendications 3 à 8,
**caractérisé en ce**
**que** le corps multicouche (1) comprend au moins une couche de vernis (13), laquelle est disposée sur le côté, opposé à la strate de support (11), de la première couche fonctionnelle (12) et qui comprend en particulier au moins un colorant et/ou au moins un pigment.

10. Corps multicouche (1) selon la revendication 9,
**caractérisé en ce**
**que** la force d'adhérence entre la première couche fonctionnelle (12) et la couche de vernis (13) est supérieure à la force d'adhérence entre la première couche fonctionnelle (12) et la strate de support (11).

11. Corps multicouche (1) selon la revendication 9 ou 10,
**caractérisé en ce**
**que** l'au moins une couche de vernis (13) est formée à partir d'un vernis à base d'eau, en particulier d'un vernis à base d'eau-isopropanol, dont le rapport entre l'eau et l'isopropanol va de 3,5:1 à 1:1, de manière préférée de 2,5:1 à 2:1.

12. Procédé de revêtement d'un substrat (5), où un corps multicouche (1) selon l'une quelconque des revendications 1 à 11 est appliqué, en particulier estampé, par sa surface opposée à la strate de support (11), sur le substrat (5), dans lequel la strate de support (11) du corps multicouche (1) est détachée, dans lequel un autre corps multicouche est appliqué, en particulier estampé, sur le substrat (5) en particulier avant l'application du corps multicouche (1) et le corps multicouche (1) est appliqué, en particulier estampé, ensuite sur l'autre corps multicouche.

13. Utilisation d'un corps multicouche (1) selon l'une quelconque des revendications 1 à 11 pour le revêtement de panneaux d'habillage, en particulier pour des murs, plafonds et/ou planchers.

Fig. 1

Fig. 2

11
11
12
13
12
11
1
14
13
12
11
4
5
12
4
5

Fig. 3

Fig. 4

$\sigma_L$
$\Theta$
$\sigma_{LS}$
$\sigma_S$
3
2

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP H11268204 B
- JP 2007145025 B
- US 2010151207 A